# EUROPÄISCHE PATENTSCHRIFT

(11) **EP 1 128 104 B1**
(45) Veröffentlichungstag und Bekanntmachung des Hinweises auf die Patenterteilung: **29.09.2004**
(21) Anmeldenummer: 01103162.2
(22) Anmeldetag: 10.02.2001
(51) Int. Cl.: F16K 11/00, G05D 23/13

(54) **Thermostatgeregelte Mischbatterie**
Thermostatically controlled mixing valve
Vanne mélangeuse commandée par thermostat

(30) Priorität: 21.02.2000 DE 10007906
(43) Veröffentlichungstag der Anmeldung: 29.08.2001
(73) Patentinhaber: Grohe Water Technology AG & Co. KG, 58675 Hemer (DE)
(72) Erfinder: Humpert, Jürgen, 58675 Hemer (DE); Heimann, Bruno, 58730 Fröndenberg (DE); Frankholz, Christian, 58730 Fröndenberg (DE); Philipps-Liebich, Hartwig, 58675 Hemer (DE)

(56) Entgegenhaltungen:
- EP-A- 0 232 454
- EP-A- 0 242 680
- DE-A- 2 703 950
- DE-A- 2 928 330
- DE-A- 3 510 009
- DE-B- 1 164 779
- ROLOFF/MATEK: "Maschinenelemente" 1974 , VIEWEG - VERLAG , BRAUNSCHWEIG XP002165308 * Seite 158 - Seite 175 *

## Beschreibung

Die Erfindung betrifft eine thermostatgeregelte Mischbatterie, wie es z.B aus dem Dokument DE-OS-2 703 950 bekannt ist insbesondere zum Bereiten von temperiertem Mischwasser, mit einem, wenigstens je eine Zulauföffnung für das kalte und das warme Medium sowie eine Ablauföffnung für das gemischte Medium aufweisenden Gehäuse, in welchem ein an einem Kopfstück gehaltener, von einer Temperaturvorwähleinrichtung stellbarer, mit einem Ventilkörper gekoppelter, die Temperatur des gemischten Mediums erfühlender Thermostat vorgesehen ist, wobei der Ventilkörper jeweils mit einem am Kopfstück und einem am Gehäuse ausgebildeten Ventilsitz für das zufließende kalte und warme Medium zusammenwirkt, und der Thermostat mit dem Ventilkörper von einer Rückstellfeder mit einem entsprechend der Umgebungstemperatur ausgelenkten Stößel gegen die Temperaturvorwähleinrichtung gedrückt ist. Eine derartige Mischbatterie ist aus der europäischen Patentanmeldung EP 0 242 680 A2 bekannt. Diese bekannten Mischbatterien arbeiten mit einem als Hohlschieber ausgebildeten Ventilkörper, der mit dem Thermostaten gekoppelt ist, wobei mit dem Ventilkörper das Verhältnis des zulaufenden Warm- und Kaltwassers geregelt wird. Die Temperatur des von der Mischbatterie abgegebenen Mischwassers soll dabei möglichst gleichbleibend der mit der Temperaturvorwähleinrichtung eingestellten Temperatur entsprechen. Die Regelgüte der Mischbatterie bei verschiedensten Betriebsbedingungen ist dabei abhängig von der Größe des Regelspalts. Als Regelspalt wird die Summe der Querschnittsbreiten des Warm- und Kaltwasserzulaufs beiderseits des Ventilkörpers bezeichnet. Die Größe des Regelspalts ist dabei nicht unwesentlich abhängig von der Summe -der Toleranzen der einzelnen, den Regelspalt bildenden Bauteile. Die Addition der Einzeltoleranzen ergibt die Gesamttoleranz des Regelspalts. Hierbei werden die an die Mischbatterie gestellten Anforderungen bezüglich der Regelgüte erreicht, indem sämtliche Maße, die sich auf die Toleranzen des Steuerspalts auswirken, sehr eng festgelegt werden. Dieses erfordert einen erhöhten Fertigungsaufwand, wodurch nicht unerhebliche Kosten entstehen.

Ferner ist aus der deutschen Auslegeschrift 11 64 779 eine andere Mischbatterie bekannt, bei der mit einer besonderen Spindel der Regelspalt einstellbar ausgebildet ist.

Der Erfindung liegt die Aufgabe zugrunde, die im Oberbegriff des Anspruchs 1 angegebene Mischbatterie zu verbessern und so auszubilden, dass mit relativ einfachen Mitteln der Regelspalt genau einstellbar ist.

Diese Aufgabe wird erfindungsgemäß dadurch gelöst, dass das Kopfstück mit dem Ventilsitz zum am Gehäuse ausgebildeten Ventilsitz feinfühlig axial von aussen verstellbar in dem Gehäuse angeordnet und in der jeweiligen Axialstellung gegen ein unbeabsichtigtes Verstellen gesichert ist.
Weitere Ausgestaltungen der Erfindung sind in den Ansprüchen 2 bis 8 angegeben.

Mit den vorgeschlagenen Maßnahmen wird eine genaue, den jeweiligen Anforderungen entsprechende Regelspalteinstellung zur Verfügung gestellt, wobei eine Toleranzerweiterung der Einzelkomponenten der Mischbatterie ermöglicht ist, so dass auch eine Reduzierung der Fertigungskosten erreichbar ist. Die Einstellung des Regelspaltes kann hierbei in einfacher Weise dadurch erreicht werden, dass zunächst das Kopfstück bis auf Block in das Gehäuse der Batterie eingeschraubt wird, d. h. die Regelspaltenweite ist auf null reduziert. Durch ein anschließend gezieltes Zurückdrehen des Kopfstücks kann in Abhängigkeit von der Gewindesteigung die Regelspaltenweite genau eingestellt werden.
Eine bestimmte Schwergängigkeit des Bewegungsgewindes bzw. eine Sicherung gegen ein unbeabsichtigtes Verdrehen des Kopfstücks im Gehäuse der Mischbatterie kann zweckmäßig von einem, im Bewegungsgewinde angeordneten Kunststoffring und/oder mit einem radial gegen das Kopfstück schraubbaren Gewindestift erreicht werden.

In weiterer Ausgestaltung der Erfindung kann das Kopfstück in einer Schraubhülse mit den üblichen Außenabmessungen angeordnet werden, so dass die erfindungsgemäße Baueinheit auch nachträglich in Gehäuse von bereits installierten Mischbatterien eingesetzt werden kann.

Ausführungsbeispiele der Erfindung sind in der Zeichnung dargestellt und werden im folgenden näher beschrieben. Es zeigt
- Fig. 1: eine sanitäre Wassermischbatterie im Längsschnitt;
- Fig. 2: einen Teil der in Fig. 1 gezeigten Mischbatterie in vergrößerter Darstellung ohne Temperaturvorwähleinrichtung im Längsschnitt;
- Fig. 3: einen Ausschnitt aus dem in Fig. 2 gezeigten Mischventil in vergrößerter Darstellung;
- Fig. 4: das in Fig. 2 gezeigte Kopfstück in vergrößerter Darstellung im Längsschnitt;
- Fig. 5: einen Teil des in Fig. 4 gezeigten Kopfstücks mit eingesetztem Kunststoffring;
- Fig. 6: ein abgewandeltes Ausführungsbeispiel, wobei zusätzlich zu der in Fig. 2 gezeigten Ausführung ein radial angeordneter Gewindestift als Sicherungselement vorgesehen ist;
- Fig. 7: einen Teil der in Fig. 6 gezeigten Ausbildung mit dem Gewindestift in vergrößerter Darstellung.

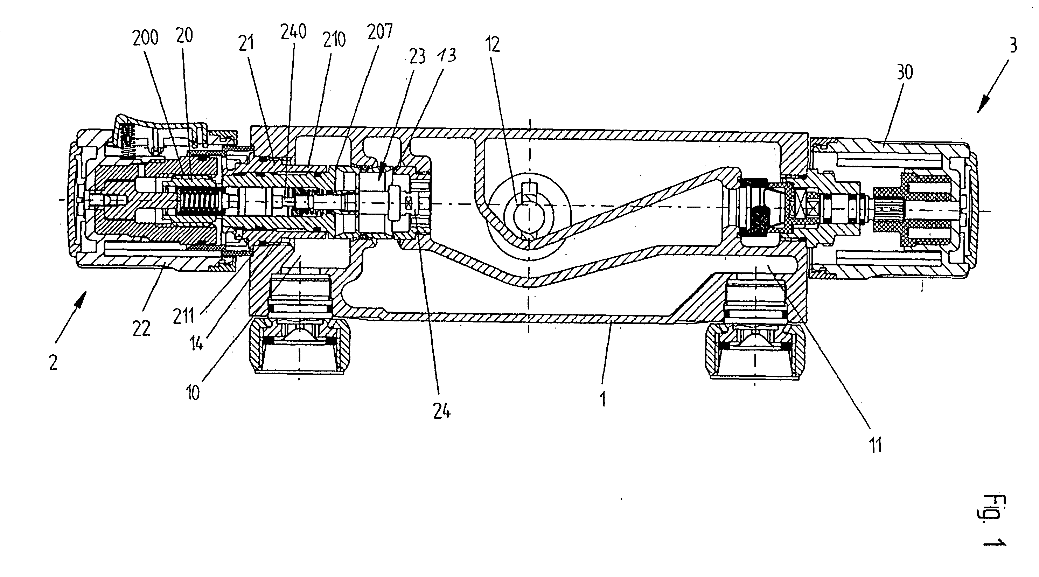

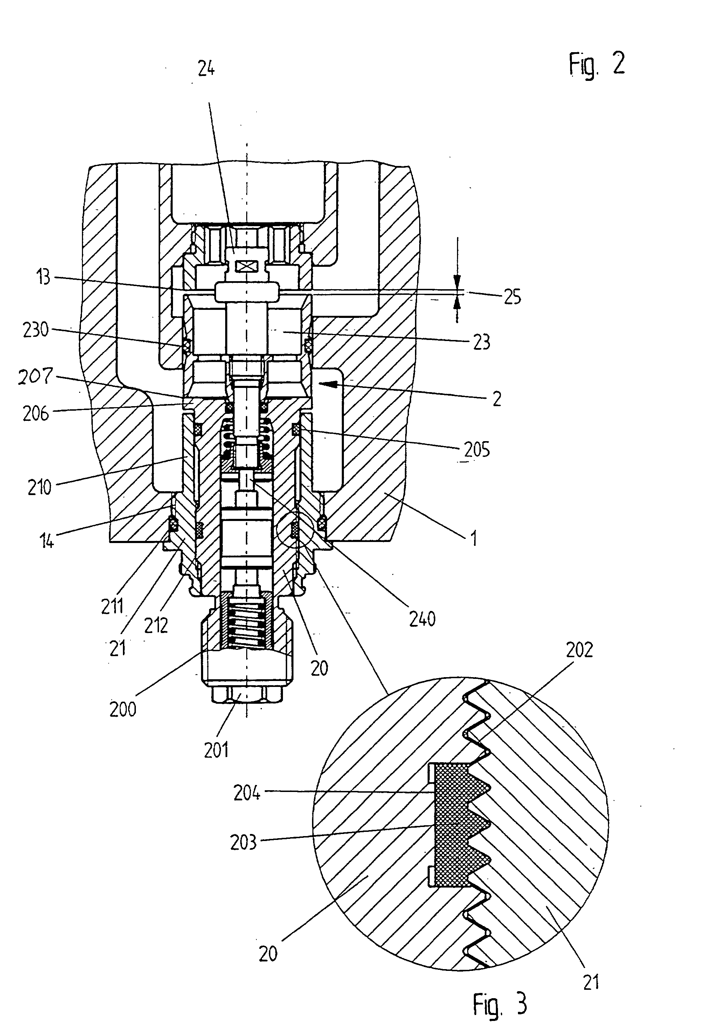

Der Einfachheit halber sind bei den beiden Ausführungsbeispielen in der Zeichnung gleiche oder entsprechende Elemente jeweils mit gleichen Bezugszeichen versehen. Die in der Zeichnung in Fig. 1 bis 5 dargestellte thermostatgeregelte Mischbatterie besteht im wesentlichen aus einem Gehäuse 1, einem thermostatgeregelten Mischventil 2 sowie einem Mengenregulierventil 3. In dem Gehäuse 1 ist jeweils eine Zuflussöffnung 10,11 für den separaten Anschluss an das Kaltwasser- und Warmwasserversorgungsleitungsnetz ausgebildet. In einer Aufnahmebohrung 14 ist das Mischventil 2 angeordnet. Das Mischventil 2 ist hierbei mit Hilfe einer auf einem Kopfstück 20 vorgesehenen Schraubhülse 21 im Gehäuse 1 gehalten. Am Außenbereich des Kopfstücks 20 ist auf einem Stellgewinde 200 eine Temperaturvorwähleinrichtung 22 angeordnet.
In dem Kopfstück 20 ist in bekannter Weise ein mit einem Ventilkörper 23 gekoppelter Thermostat 24 gehalten, der mit Hilfe einer Rückstellfeder in Richtung auf die Temperaturvorwähleinrichtung 22 mit einem entsprechend der Umgebungstemperatur ausgelenkten Stößel 240 gedrückt ist, wie es insbesondere aus Fig. 2 der Zeichnung zu entnehmen ist.
Der Ventilkörper 23 ist dabei hohlkolbenförmig ausgebildet und zur Einstellung und Regelung des Mischvorgangs im Gehäuse 1 axial zwischen einem am Gehäuse 1 ausgebildeten Ventilsitz 13 und einem am Kopfstück 20 ausgebildeten Ventilsitz 207 verschiebbar angeordnet. Der Ventilkörper 23 ist hierbei mit einem Dichtring 230 verschiebbar und gedichtet in einer Trennwand im Gehäuse 1 angeordnet. Das Warmwasser ist separat in einem Ringkanal um den Ventilsitz 13 in dem Gehäuse 1 herangeführt, während das Kaltwasser im Bereich des Ventilsitzes 207 am Kopfstück 20 in einem Ringkanal ebenfalls separat herangeführt ist. Mit einer Axialverschiebung des Ventilkörpers 23 zwischen den beiden Ventilsitzen 207,13 kann somit das Mischungsverhältnis des zufließenden Kalt- und Warmwassers bestimmt werden. Für die Regelgüte der Mischbatterie ist hierbei eine maximale Regelspaltweite 25 wesentlich. Das im Bereich des Ventilsitzes 13 gemischte Kalt- und Warmwasser überstreicht als temperiertes Mischwasser einen Fühlbereich des Thermostaten 24 und gelangt danach über eine Leitung an das Mengenregulierventil 3. Durch eine Drehbewegung mit einem Stellgriff 30 kann die Ausflussmenge des temperierten Mischwassers eingestellt werden, welches über eine Ablassöffnung 12 im Gehäuse 1 austritt.

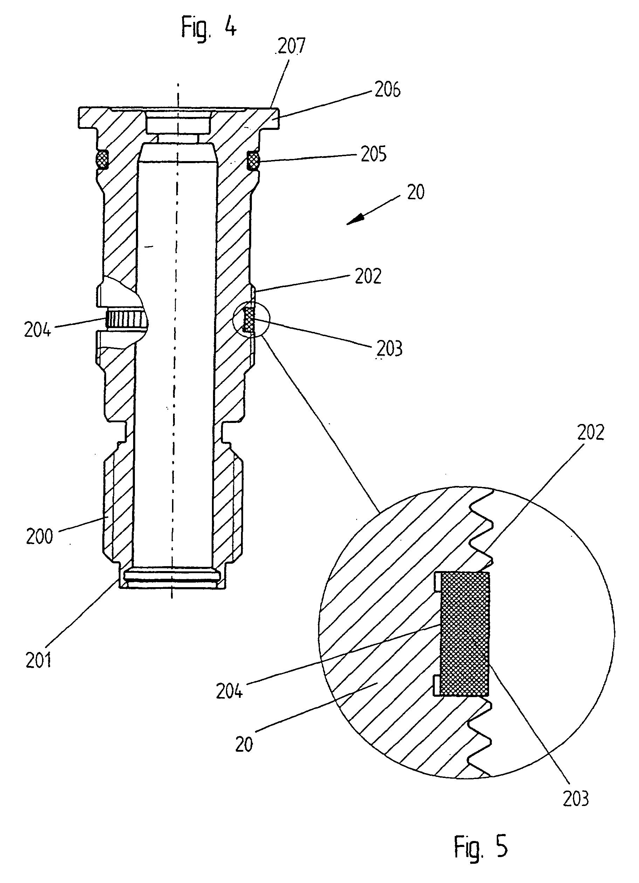

Zur Einstellbarkeit der maximalen Regelspaltweite 25 ist das Kopfstück 20 in der Schraubhülse 21 mit einem Bewegungsgewinde 202 axial verschieblich angeordnet. Zum Ansatz eines Drehwerkzeuges ist hierbei im Bereich der äußeren Stirnseite des Kopfstücks 20 ein Polygonprofil 201 ausgebildet.
Zur guten Führung ist an der Schraubhülse 21 ein sich in das Gehäuse 1 hineinerstreckender Hohlansatz 210 ausgebildet, dessen Innenwandung eine Dichtfläche für einen Dichtring 205 zwischen Kopfstück 20 und Schraubhülse 21 bildet. Außerdem ist im Bereich des Bewegungsgewindes 202 ein Kunststoffring 203 in einer umlaufenden Nut eingebracht, wie es insbesondere aus Fig. 4 und 5 ersichtlich ist. Damit der Kunststoffring 203 drehfest mit dem aus Metall hergestellten Kopfstück 20 verbunden ist, ist der Grund der Ringnut mit einer Rändelung 204 versehen. Bei einem erstmaligen Einschrauben des Kopfstücks 20 in die Schraubhülse 21 wird in den in Fig. 5 gezeigten Kunststoffring 203 das Bewegungsgewinde 202 eingeschnitten, wie es aus Fig. 3 der Zeichnung zu entnehmen ist. Hierdurch wird einerseits eine bestimmte Schwergängigkeit des Bewegungsgewindes 202 erreicht, während andererseits eine spielfreie Führung des Bewegungsgewindes 202 gewährleistet ist. Das Kopfstück 20 kann hierbei bis zur Anlage eines im Durchmesser vergrößerten Flansches 206 an der inneren Stirnseite des Hohlansatzes 210 in die Schraubhülse 21 eingedreht werden. Die Schraubhülse 21 hat außerdem einen vom Gehäuse 1 vorkragenden Außenbereich 212.
Die Schraubhülse 21 kann mit dem Kopfstück 20, dem Thermostaten 24 und dem Ventilkörper 23 als Baueinheit in die Aufnahmebohrung bis zur Anlage eines Ringbundes eingeschraubt werden, wobei in der Einschraublage mit einem Dichtring 211 die Abdichtung bewerkstelligt wird. Die Außenabmessungen der Schraubhülse 21 sind dabei so dimensioniert, dass das Mischventil 2 in die Aufnahmeöffnung des Gehäuses von bekannten Mischbatterien einsetzbar ist.
Die Einstellung der maximalen Regelspaltweite 25 kann hierbei in folgender Weise vorgenommen werden:

Nach dem Einbringen der Baueinheit des Mischventils 2 wird das Kopfstück 20 soweit in das Gehäuse 1 in Richtung des Ventilsitzes 13 eingeschraubt, bis der Ventilkörper 23 stirnseitig auf dem Ventilsitz 13 zur Auflage gelangt. In dieser Position ist die maximale Regelspaltweite 25 auf Null reduziert.
Im Anschluss daran wird das Kopfstück 20 um einen bestimmten Drehwinkel zurückgedreht, so dass dadurch die maximale Regelspaltweite eingestellt wird. Über die Gewindesteigung des Bewegungsgewindes 202 lässt sich für einen bestimmten einzustellenden Regelspalt der dazugehörige Drehwinkel berechnen. Um beispielsweise eine maximale Regelspaltweite 25 von 0,5 mm bei einer Steigung des Bewegungsgewindes 202 von 1,0 mm einzustellen, beträgt der Drehwinkel 180°.

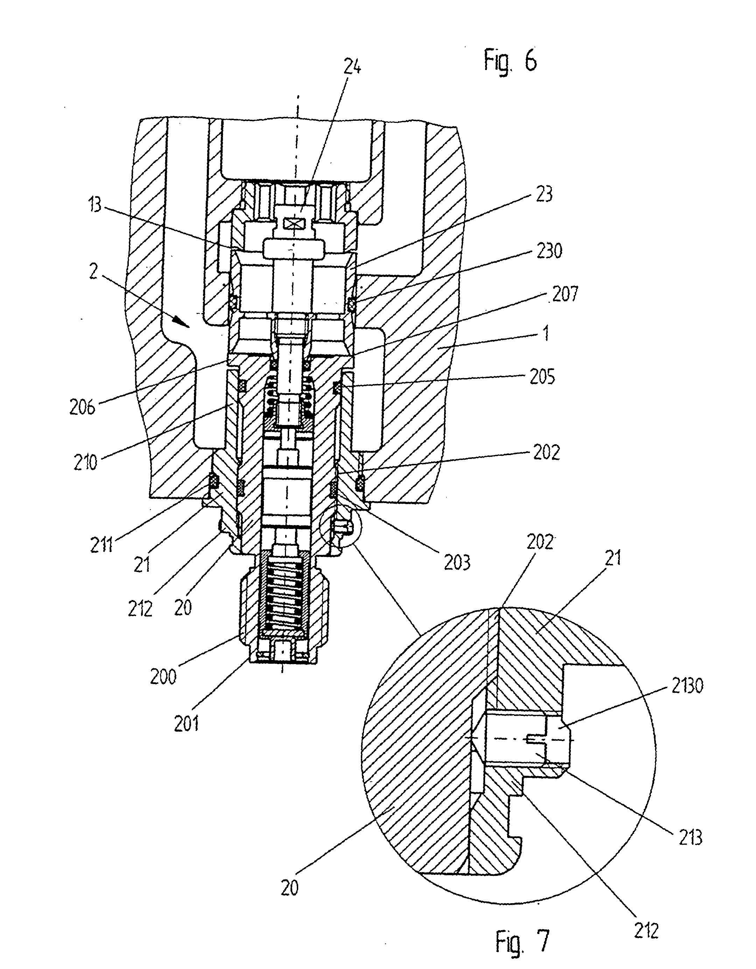

Das in Fig. 6 und 7 der Zeichnung gezeigte Ausführungsbeispiel unterscheidet sich zu dem vorstehend beschriebenen Ausführungsbeispiel lediglich dadurch, dass zusätzlich im Außenbereich 212 der Schraubhülse 21 in einer Radialbohrung 2130 ein Gewindestift 213 angeordnet ist, mit dem als zusätzliche Sicherung das Kopfstück 20 in seiner Drehstellung zur Schraubhülse 21 fixierbar ist.

Bei den vorstehend beschriebenen Ausführungsbeispielen ist das Kopfstück 20 in einer Schraubhülse 21 angeordnet, die wiederum in eine Aufnahmebohrung 14 des Gehäuses 1 einschraubbar ist.
Selbstverständlich kann aber auch das Gehäuse mit einer Aufnahmebohrung ausgebildet werden, in der das Bewegungsgewinde unmittelbar ausgebildet ist, so dass eine besondere Schraubhülse entfallen kann. Hierbei ist es aber erforderlich, dass ein besonderes Gehäuse der Mischbatterie verwendet wird.

## Patentansprüche

1. Thermostatgeregelte Mischbatterie, insbesondere zum Bereiten von temperiertem Mischwasser, mit einem, wenigstens je eine Zulauföffnung für das kalte und das warme Medium sowie eine Ablauföffnung für das gemischte Medium aufweisenden Gehäuse (1), in welchem ein an einem Kopfstück (20) gehaltener, von einer Temperaturvorwähleinrichtung (22) stellbarer, mit einem Ventilkörper (23) gekoppelter, die Temperatur des gemischten Mediums erfühlender Thermostat (24) vorgesehen ist, wobei der Ventilkörper (23) jeweils mit einem am Kopfstück (20) und einem am Gehäuse (1) ausgebildeten Ventilsitz (13, 207) für das zufließende kalte und warme Medium zusammenwirkt, und der Thermostat (24) mit dem Ventilkörper (23) von einer Rückstellfeder mit einem entsprechend der Umgebungstemperatur ausgelenkten Stößel (240) gegen die Temperaturvorwähleinrichtung (22) gedrückt ist, **dadurch gekennzeichnet, dass** das Kopfstück (20) mit dem Ventilsitz (207) zum am Gehäuse (1) ausgebildeten Ventilsitz (13) feinfühlig axial von außen verstellbar in dem Gehäuse (1) angeordnet und in der jeweiligen Axialstellung gegen ein unbeabsichtigtes Verstellen gesichert ist.

2. Thermostatgeregelte Mischbatterie nach Anspruch 1, **dadurch gekennzeichnet, dass** als Stellmittel ein Bewegungsgewinde (202) mit einer bestimmten Schwergängigkeit vorgesehen ist.

3. Thermostatgeregelte Mischbatterie nach Anspruch 2, **dadurch gekennzeichnet, dass** in dem Bewegungsgewinde (202) des Kopfstücks (20) ein Kunststoffring (203) eingelassen ist, so dass in der Einschraubstellung sich das Bewegungsgewinde (202) in den Kunststoffring (203) einschneidet und dadurch eine bestimmte Schwergängigkeit und eine spielfreie Aufnahme des Kopfstücks (20) gewährleistet.

4. Thermostatgeregelte Mischbatterie nach wenigstens einem der Ansprüche 1 bis 3, **dadurch gekennzeichnet, dass** das Kopfstück (20) von einer Schraubhülse (21) aufgenommen, von dem Bewegungsgewinde (202) axial gehalten und mit einem Dichtring (205) nach außen abgedichtet ist, wobei die Schraubhülse (21), vorzugsweise zusammen mit dem koaxial angeordneten Kopfstück (20) und den anderen Teilen des Mischventils (2), in eine Aufnahmebohrung (14) des Gehäuses (1) mit einem Dichtring (211) gedichtet einschraubbar ist.

5. Thermostatgeregelte Mischbatterie nach Anspruch 4, **dadurch gekennzeichnet, dass** die Schraubhülse (21) einen in das Gehäuse (1) vorstehenden Hohlansatz (210) trägt, dessen Innenwandung eine Anlage- und Führungsfläche für einen Dichtring (205) bildet.

6. Thermostatgeregelte Mischbatterie nach Anspruch 5, **dadurch gekennzeichnet, dass** der aus dem Hohlansatz (210) vorstehende Bereich des Kopfstücks (20) mit einem im Durchmesser vergrößerten Flansch (206) versehen ist, dessen vorstehende Stirnseite einen Ventilsitz (207) bildet.

7. Thermostatgeregelte Mischbatterie nach wenigstens einem der Ansprüche 4 bis 6, **dadurch gekennzeichnet, dass** die Schraubhülse (21) einen von dem Gehäuse (1) vorstehenden Außenbereich (212) aufweist, in dem ein Gewindestift (213) in einer Radialbohrung (2130) angeordnet ist.

8. Thermostatgeregelte Mischbatterie nach wenigstens einem der Ansprüche 4 bis 7, **dadurch gekennzeichnet, dass** an dem aus der Schraubhülse (21) vorstehenden Bereich des Kopfstücks (20) ein Polygonprofil (201) für den Ansatz eines Drehwerkzeugs ausgebildet ist.

## Claims

1. Thermostat-controlled mixer tap, especially for producing temperature-modified mixed water, with a housing (1) having at least one respective inlet opening for the cold and the hot media and also an outlet opening for the mixed medium, in which housing there is provided a thermostat (24) that is retained on a head piece (20), is adjustable by means of a temperature pre-selection device (22), is coupled with a valve body (23) and senses the temperature of the mixed medium, the valve body (23) co-operating with respective valve seats (13, 207) formed on the head piece (200) and the housing (1) for the inflowing cold and hot media, and the thermostat (24), together with the valve body (23), being pressed by a restoring spring, with a tappet (240) extended in accordance with the ambient temperature, towards the temperature pre-selection device (22), **characterised in that** the head piece (20) with the valve seat (207) is arranged in the housing (1) so as to be finely axially adjustable from the outside with respect to the valve seat (13) formed on the housing (1) and is secured in the respective axial position against inadvertent displacement.

2. Thermostat-controlled mixer tap according to claim 1, **characterised in that** a displacement thread (202) having a certain operating stiffness is provided as adjusting means.

3. Thermostat-controlled mixer tap according to claim 2, **characterised in that** a plastics ring (203) is let into the movement thread (202) of the head piece (20), so that in the screwed-in position the movement thread (202) cuts into the plastics ring (203) and thereby ensures a certain operating stiffness and accommodation of the head piece (20) without play.

4. Thermostat-controlled mixer tap according to at least one of claims 1 to 3, **characterised in that** the head piece (20) is received by a screw sleeve (21), is held axially by the displacement thread (202) and is sealed with respect to the outside by a sealing ring (205), wherein the screw sleeve (21), preferably together with the coaxially arranged head piece (20) and the other parts of the mixing valve (2), is arranged to be screwed, so that it is sealed with a sealing ring (211), into a receiving bore (14) of the housing (1).

5. Thermostat-controlled mixer tap according to claim 4, **characterised in that** the screw sleeve (21) carries a hollow extension (210) projecting into the housing (1), the inner wall of which hollow extension forms a bearing surface and guide surface for a sealing ring (205).

6. Thermostat-controlled mixer tap according to claim 5, **characterised in that** the region of the head piece (20) projecting out of the hollow extension (210) is provided with a flange (206) of enlarged diameter, the projecting end face of which forms a valve seat (207).

7. Thermostat-controlled mixer tap according to at least one of claims 4 to 6, **characterised in that** projecting from the housing (1) the screw sleeve (21) has an outer region (212), in which a threaded pin (213) is arranged in a radial bore (2130).

8. Thermostat-controlled mixer tap according to at least one of claims 4 to 7, **characterised in that** on the region of the head piece (20) projecting out of the screw sleeve (21) a polygonal profile (201) is formed for receiving a turning tool.

## Revendications

1. Mitigeur thermostatique, en particulier pour disposer d'une eau mélangée tempérée, comprenant au moins respectivement un orifice d'amenée pour le milieu froid et le milieu chaud ainsi qu'un orifice de sortie pour le boîtier (1) présentant le milieu mélangé, dans lequel un thermostat (24) maintenu dans un élément de tête (20) est prévu pour prendre en compte la température du milieu mélangé, thermostat accouplé à un corps de vanne (23) et réglable par un dispositif de présélection de température (22), le corps de vanne (23) coopérant respectivement avec un siège de vanne (13, 207) configuré dans l'élément de tête (20) et dans le boîtier (1) pour le milieu chaud et froid s'écoulant, et le thermostat (24) étant poussé avec le corps de vanne (23) par un ressort de rappel avec un poussoir (240) aiguillé en fonction de la température ambiante contre le dispositif de présélection de température (22),
**caractérisé en ce que**
l'élément de tête (20) est disposé avec le siège de vanne (207) dans le boîtier (1) réglable de l'extérieur axialement et sensible par rapport au siège de vanne (13) configuré dans le boîtier (1) et est assuré contre tout réglage non intentionnel dans la position axiale respective.

2. Mitigeur thermostatique selon la revendication 1,
**caractérisé en ce que**
pour le moyen de réglage, on prévoit un filetage (202) à pas lourd défini.

3. Mitigeur thermostatique selon la revendication 2,
**caractérisé en ce que**
dans le filetage (202) de l'élément de tête (20), un anneau en plastique (203) est disposé de telle sorte que, dans la position de vissage, le filetage (202) entre dans l'anneau en plastique (203) et assure ainsi un pas lourd défini et une réception sans jeu de l'élément de tête (20).

4. Mitigeur thermostatique selon au moins l'une des revendications 1 à 3,
**caractérisé en ce que**
l'élément de tête (20) est reçu par un support de vissage (21), maintenu axialement par le filetage (202) et protégé vers l'extérieur par une bague d'étanchéité (205), le support de vissage (21) pouvant être vissé de manière étanche avec une bague d'étanchéité (211) dans un alésage de réception (14) du boîtier (1) de préférence avec l'élément de tête (20) disposé coaxialement et les autres parties de la vanne de mélange (2).

5. Mitigeur thermostatique selon la revendication 4,
**caractérisé en ce que**
le support de vissage (21) porte un épaulement creux (210) qui dépasse dans le boîtier (1) et dont la paroi interne forme une surface d'appui et de guidage pour une bague d'étanchéité (205).

6. Mitigeur thermostatique selon la revendication 5,
**caractérisé en ce que**
la région de l'élément de tête (20) qui dépasse de l'épaulement creux (210) est prévue avec une bride (206) de diamètre agrandi, dont la face frontale qui dépasse forme un siège de valve (207).

7. Mitigeur thermostatique selon au moins l'une des revendications 4 à 6,
**caractérisé en ce que**
le support de vissage (21) présente une région externe (212) qui dépasse du boîtier (1), région dans laquelle une vis sans tête (213) est disposée dans un alésage radial (2130).

8. Mitigeur thermostatique selon au moins l'une des revendications 4 à 7,
**caractérisé en ce que**
dans la région de l'élément de tête (20) qui dépasse du support de vissage (21), un profil polygonal (201) est configuré pour l'épaulement d'un outil de tournage.
